# FASCICULE DE BREVET EUROPEEN

(11) **EP 2 142 779 B1**
(45) Date de publication et mention de la délivrance du brevet: **31.08.2011**
(21) Numéro de dépôt: 08805700.5
(22) Date de dépôt: 24.04.2008
(51) Int. Cl.: F02C 7/045, F02K 1/82

(54) **PANNEAU ACOUSTIQUE A CARACTERISTIQUE ACOUSTIQUE VARIABLE**
AKUSTISCHE TAFEL MIT VERÄNDERLICHER AKUSTISCHER EIGENSCHAFT
ACOUSTIC PANEL HAVING A VARIABLE ACOUSTIC CHARACTERISTIC

(30) Priorité: 30.04.2007 FR 0754783
(43) Date de publication de la demande: 13.01.2010
(73) Titulaire: Airbus Operations, 31060 Toulouse (FR)
(72) Inventeur: LIDOINE, Stéphane, 31270 Cugnaux (FR)
(74) Mandataire: Fantin, Laurent
(86) Numéro de dépôt international: PCT/FR2008/050746
(87) Numéro de publication internationale: WO 2008/152259

(56) Documents cités:
- FR-A- 2 317 504
- FR-A- 2 482 663
- US-A1- 2003 141 144

## Description

La présente invention se rapporte à un panneau acoustique possédant au moins une caractéristique acoustique variable.

Pour limiter l'impact des nuisances sonores à proximité des aéroports, les normes internationales sont de plus en plus contraignantes en matière d'émissions sonores.

Des techniques ont été développées pour réduire le bruit émis par l'aéronef, et notamment le bruit émis par un ensemble propulsif d'aéronef, en disposant au niveau de certaines parois, des revêtements visant à absorber une partie de l'énergie sonore, notamment en utilisant le principe des résonateurs d'Helmholtz. De manière connue, ce revêtement acoustique, également appelé panneau acoustique, comprend de l'extérieur vers l'intérieur une structure acoustiquement résistive, une structure alvéolaire et une couche réflectrice. Par structure ou couche, on entend une ou plusieurs couches de même nature ou non. La structure acoustiquement résistive est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette couche acoustiquement résistive se caractérise principalement par un taux de surface ouverte appelé également T50.

Dans le cas d'une couche acoustiquement résistive plus complexe, par exemple celles comportant un tissu métallique ou des bandes de carbone ou plus généralement des aspérités au niveau de la surface en contact avec les écoulements aérodynamiques, d'autres caractéristiques acoustiques de la couche acoustiquement résistive peuvent être ajustées notamment, sa résistance à l'écoulement à vitesse nulle, appelée également R0, son facteur de non linéarité appelé également NLF.

Un exemple de panneau acoustique est notamment décrit dans la demande de brevet FR-2.826.168 au nom du demandeur, ainsi que dans le document FR 2317504.

Les panneaux acoustiques sont des éléments à réaction localisée qui peuvent être caractérisés par leur impédance normale de paroi. Cette impédance dépend de nombreuses caractéristiques, notamment celles du panneau acoustique, par exemple la hauteur des cavités de la structure alvéolaire, ou plus particulièrement de la structure acoustiquement résistive (principalement TSO, R0, NLF). Cette impédance dépend également des caractéristiques liées à l'écoulement d'air s'écoulant en surface du panneau et d'autres liées au son, notamment la fréquence de l'onde acoustique et son amplitude.

Selon une application, un panneau acoustique peut être utilisé pour recouvrir certaines parois d'un ensemble propulsif, notamment celles d'une nacelle dans laquelle est disposée de manière sensiblement concentrique une motorisation.

La nacelle comprend une paroi intérieure délimitant un conduit avec une entrée d'air à l'avant, une première partie du flux d'air entrant, appelée flux primaire, traversant la motorisation pour participer à la combustion, la seconde partie du flux d'air, appelée flux secondaire, étant entrainée par une soufflante et s'écoulant dans un conduit annulaire délimité par la paroi intérieure de la nacelle et la paroi extérieure de la motorisation, les différents conduits ayant le même axe longitudinal.

Pour atténuer le bruit émis par un ensemble propulsif, la paroi intérieure de la nacelle est revêtue d'un panneau acoustique qui s'étend depuis l'entrée d'air jusqu'à l'arrière du conduit secondaire. Le panneau acoustique est généralement réalisé en plusieurs parties de préférence jointives.

Pour une nacelle et une motorisation données, les caractéristiques du panneau acoustique et plus particulièrement celles de la structure acoustiquement résistive, notamment TSO, RO, NLF, sont déterminées de manière à obtenir une impédance optimale aux fréquences et aux régimes moteur d'intérêt afin de réduire au maximum le bruit émis par l'ensemble propulsif considéré.

Ainsi, pour un ensemble propulsif, à savoir pour une nacelle et une motorisation données, les caractéristiques du panneau acoustique et plus particulièrement celles de la structure acoustiquement résistive, notamment TSO, RO, NLF, sont constantes sur la circonférence et selon la direction longitudinale de la nacelle. Cette solution n'est pas satisfaisante car elle ne permet pas d'optimiser l'atténuation du bruit tout le long du conduit de ladite nacelle.

Aussi, la présente invention vise à pallier les inconvénients de l'art antérieur en proposant un panneau acoustique permettant d'optimiser l'atténuation du bruit tout le long de la propagation de l'onde acoustique.

A cet effet, l'invention a pour objet une nacelle conforme à la revendication 1.

D'autres caractéristiques et avantages ressortiront de la description qui va suivre de l'invention, description donnée à titre d'exemple uniquement, en regard des dessins annexés sur lesquels :
- la figure 1 est une vue en perspective d'un ensemble propulsif d'un aéronef,
- la figure 2 est une vue en coupe d'un ensemble propulsif d'un aéronef,
- la figure 3 est une coupe transversale d'un panneau d'atténuation acoustique,
- la figure 4 est une vue de dessus illustrant la variation du taux de surface ouverture d'une structure acoustiquement résistive selon l'invention, et
- la figure 5 est un schéma illustrant les variations de la résistance à l'écoulement à vitesse nulle, RO, et du facteur de non linéarité, NLF, d'une structure acoustiquement résistive selon l'invention.

La présente invention est maintenant décrite appliquée à un ensemble propulsif d'un aéronef. Cependant, elle peut s'appliquer au niveau des différentes zones d'un aéronef au niveau desquelles un traitement acoustique est opéré, par exemple le bord d'attaque des ailes ou tout autre endroit proche du moteur ou proche des pales moteur.

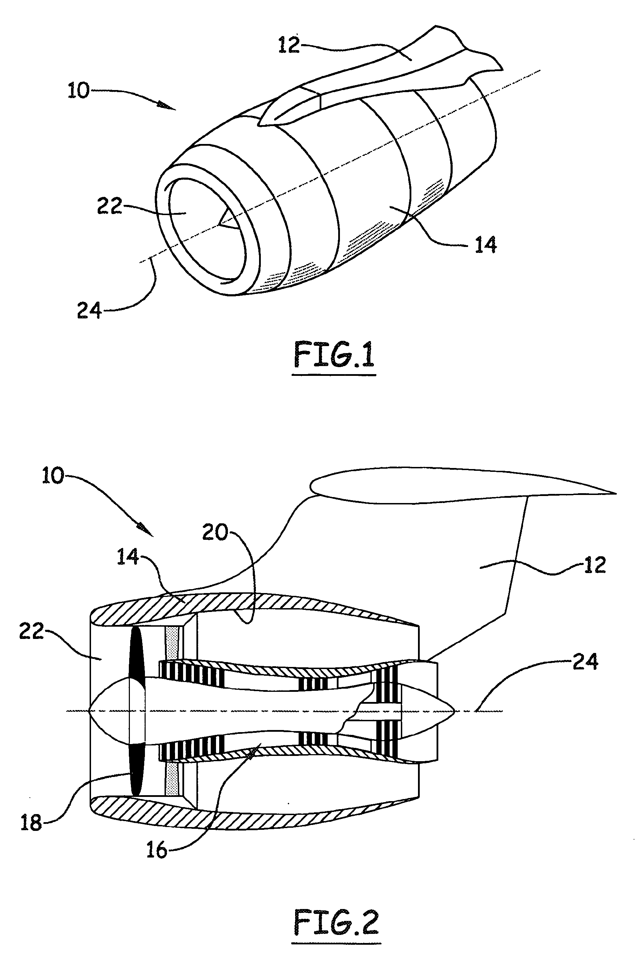

Sur la figure 1, on a représenté un ensemble propulsif 10 d'un aéronef relié sous la voilure par l'intermédiaire d'un mât 12. Toutefois, cet ensemble propulsif pourrait être relié à d'autres zones de l'aéronef.

Cet ensemble propulsif comprend une nacelle 14 dans laquelle est disposée de manière sensiblement concentrique une motorisation 16 entraînant une soufflante 18.

La nacelle 14 comprend une paroi intérieure 20 délimitant un conduit avec une entrée d'air 22 à l'avant, une première partie du flux d'air entrant, appelée flux primaire, traversant la motorisation pour participer à la combustion, la seconde partie du flux d'air, appelée flux secondaire, étant entrainée par la soufflante et s'écoulant dans un conduit annulaire délimité par la paroi intérieure 20 de la nacelle et la paroi extérieure de la motorisation, les différents conduits ayant le même axe longitudinal 24.

Pour la suite de la description, on entend par surface aérodynamique l'enveloppe de l'aéronef en contact avec le flux aérodynamique.

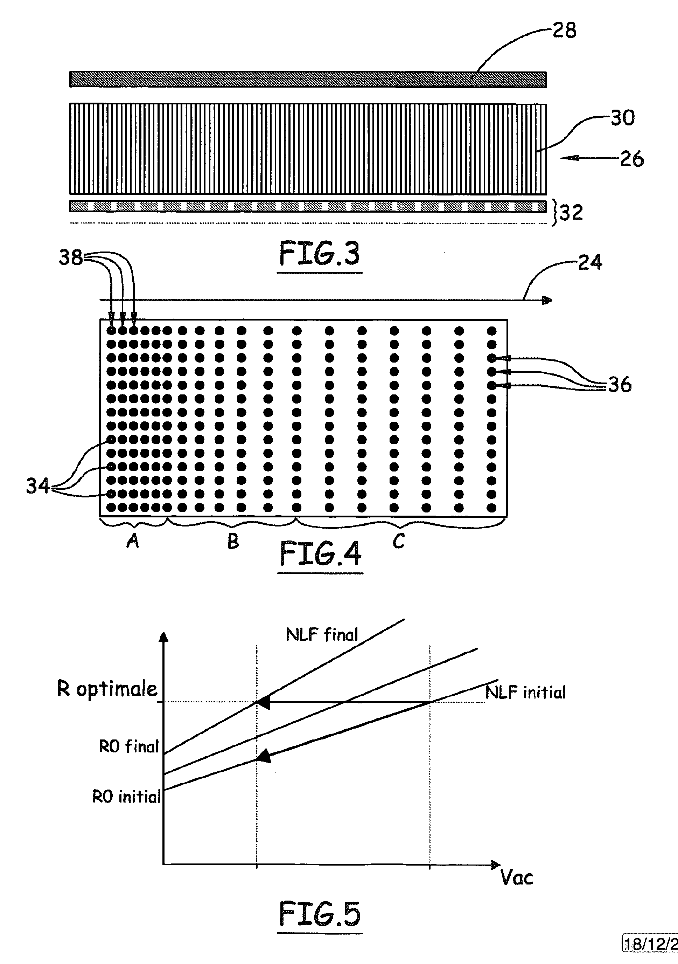

Pour limiter l'impact des nuisances, un revêtement 26 visant à absorber une partie de l'énergie sonore, notamment en utilisant le principe des résonateurs d'Helmholtz, est prévu notamment au niveau des surfaces aérodynamiques. De manière connue, ce revêtement acoustique, également appelé panneau acoustique, comprend de l'intérieur vers l'extérieur une couche réflectrice 28, au moins une structure alvéolaire 30 et une structure acoustiquement résistive 32, comme illustré sur la figure 3.

En variante, le revêtement acoustique 26 pourrait comprendre plusieurs structures alvéolaires séparées par des structures acoustiquement résistives appelées septum.

Le revêtement acoustique peut s'étendre sur la paroi intérieure 20 de la nacelle, de préférence, depuis l'avant et recouvrir le bord d'attaque ou lèvre de l'entrée d'air de la nacelle, jusqu'à la sortie arrière de la nacelle.

Selon un mode de réalisation, la couche réflectrice 28 peut se présenter sous la forme d'une tôle métallique ou d'une peau constituée d'au moins une couche de fibres tissées ou non tissées noyées dans une matrice en résine.

La structure alvéolaire 30 peut se présenter sous la forme d'un nid d'abeilles métallique ou en matériau composite, par exemple une structure en nid d'abeilles commercialisées sous l'appellation Nida Nomex. En variante, la structure alvéolaire pourrait être obtenue par d'autres moyens, par exemple, par l'assemblage de bandes qui s'entrecroisent de manière à délimiter des cellules ouvertes à chacune de leurs extrémités.

La couche réflectrice 28 et la structure alvéolaire 30 ne sont pas plus détaillées car elles sont connues de l'homme du métier.

La structure acoustiquement résistive 32 est une structure poreuse ayant un rôle dissipatif, transformant partiellement l'énergie acoustique de l'onde sonore la traversant en chaleur. Elle comprend des zones dites ouvertes susceptibles de laisser passer les ondes acoustiques et d'autres dites fermées ou pleines ne laissant pas passer les ondes sonores mais destinées à assurer la résistance mécanique de ladite couche. Cette structure acoustiquement résistive 32 se caractérise principalement par un taux de surface ouverte appelé également TSO.

Dans le cas d'une structure acoustiquement résistive 32 plus complexe, par exemple celles comportant un tissu métallique ou des bandes de carbone ou plus généralement des aspérités au niveau de la surface aérodynamique, d'autres caractéristiques acoustiques de la couche acoustiquement résistive peuvent être ajustées notamment, sa résistance à l'écoulement à vitesse nulle, appelée également RO, son facteur de non linéarité appelé également NLF.

Selon un mode de réalisation, la structure acoustiquement résistive 32 peut se présenter sous la forme d'au moins une couche de fibres tissées ou non tissées, les fibres étant de préférence enrobées d'une résine pour assurer la reprise des efforts dans les directions des fibres.

Selon un autre mode de réalisation, la structure acoustiquement résistive 32 comprend au moins une couche poreuse sous la forme par exemple d'un tissu métallique ou non tel qu'un Wiremesh et au moins une couche structurale par exemple une tôle métallique ou composite avec des trous oblongs ou des microperforations.

Généralement, la paroi intérieure 20 de la nacelle est recouverte de plusieurs panneaux acoustiques jointifs. Pour la suite de la description, on entend par un panneau acoustique, un ou plusieurs panneaux acoustiques jointifs.

L'invention n'est toutefois pas limitée aux modes de réalisation décrits, d'autres solutions étant envisageables pour réaliser une structure acoustiquement résistive.

D'un point de vue fonctionnel, un panneau acoustique a vis-à-vis des ondes acoustiques une réaction localisée que l'on peut caractériser par son impédance normale de paroi. Cette impédance est fonction de certaines caractéristiques du panneau acoustique notamment TSO, RO, NLF et de la hauteur de la structure alvéolaire, de certaines caractéristiques de l'écoulement aérodynamique, notamment la vitesse de l'écoulement, et de certaines caractéristiques de l'onde acoustique, notamment sa fréquence et son amplitude.

De manière connue, les caractéristiques du panneau acoustique ou de la partie de panneau sont déterminées de manière à atteindre l'impédance optimale aux fréquences et aux régimes moteurs d'intérêt afin de réduire au maximum le bruit émis par l'ensemble propulsif.

Dans le cas d'une nacelle, les ondes acoustiques se propagent selon l'axe longitudinal 24, plus généralement selon une direction privilégiée correspondant à la direction d'écoulement des flux d'air. Pour la suite de la description, on entend par une onde acoustique, une ou plus généralement plusieurs ondes acoustiques. Au cours de la propagation desdites ondes acoustiques dans les conduits, notamment dans le conduit secondaire, les conditions aérodynamiques de l'écoulement rasant la structure acoustiquement résistive et l'amplitude de l'onde acoustique varient le long de l'axe longitudinal 24 de la nacelle en raison notamment de l'absorption de l'énergie acoustique par le revêtement acoustique. Selon l'invention, au moins une des caractéristiques du panneau acoustique influençant l'impédance varie selon l'axe de propagation des ondes acoustiques, plus précisément selon l'axe longitudinal 24 de la nacelle afin de s'opposer localement aux variations de l'impédance en raison de l'évolution des caractéristiques liées à l'écoulement aérodynamique et/ou à l'onde acoustique. Ainsi, selon l'axe de propagation de l'onde acoustique, les caractéristiques du panneau acoustique influençant l'impédance évoluent afin de conserver une impédance locale optimale, et plus particulièrement la partie réelle de l'impédance correspondant à la résistance, qui permet d'obtenir le maximum d'atténuation.

Selon une autre caractéristique de l'invention, au moins une caractéristique du panneau acoustique influençant l'impédance varie de manière continue, sans variations brusques selon l'axe de propagation des ondes acoustique. En effet, le demandeur a noté que les variations brusques d'impédance génèrent de la diffraction et/ou peuvent distordre la structure modale rendant moins efficace le traitement acoustique.

Selon une autre caractéristique de l'invention, au moins une caractéristique et de préférence toutes les caractéristiques du panneau acoustique influençant l'impédance sont sensiblement constantes dans un plan perpendiculaire à l'axe de propagation. Dans le cas d'une nacelle, les caractéristiques du panneau acoustique influençant l'impédance pour l'ensemble des points situés dans un même plan perpendiculaire à l'axe longitudinal sont constantes afin de ne pas briser la symétrie de révolution.

Selon l'invention au moins une caractéristique du panneau acoustique influençant l'impédance est constante dans une zone A au niveau de l'entrée d'air de la nacelle et a une valeur V1, et est constante dans une zone C dans la partie arrière de la nacelle et a une valeur V2 et varie dans une zone B séparant les zones A et C passant de manière continue de la valeur V1 à la valeur V2.

Selon un premier mode de réalisation, le panneau acoustique comprend un taux de surface ouverte TSO qui varie de manière continue selon l'axe longitudinal 24. A titre d'exemple, comme illustré sur la figure 4, les ouvertures sont obtenues par des ouvertures 34 disposées selon des premières lignes 36 sensiblement parallèles à l'axe longitudinal 24. Pour ne pas rompre la symétrie de révolution, les ouvertures 34 sont également disposées selon des secondes lignes 38 sensiblement perpendiculaires à l'axe longitudinal 24. La variation continue du TSO est réalisée en écartant ou en raccourcissant progressivement la distance entre les secondes lignes 38. En variante, on pourrait conserver un espacement constant entre les secondes lignes 38 et augmenter le diamètre des trous progressivement seconde ligne par seconde ligne.

Ainsi, comme illustré sur la figure 4, la valeur du TSO peut être constante et égale à TSO1 sur une zone A, notamment au niveau de l'entrée d'air, être également constate et égale à TSO2 sur une zone C, notamment à l'arrière de la nacelle et varier de manière continue et progressive dans une zone intermédiaire B depuis la valeur TSO1 jusqu'à la valeur TSO2

Selon un autre mode de réalisation, le panneau acoustique comprend un RO qui varie de manière continue selon l'axe de propagation de l'onde. En effet, dans la mesure où l'amplitude et la vitesse de l'onde décroit, il est possible de compenser ces variations en augmentant progressivement RO le long de l'axe de propagation de l'onde qui correspond à l'axe longitudinal 24 de la nacelle. De préférence, lorsqu'on choisit de faire varier la résistance à l'écoulement à vitesse nulle, RO, pour compenser les variations de l'impédance en raison de l'évolution des caractéristiques liées à l'écoulement aérodynamique et/ou à l'onde acoustique, le facteur de non linéarité NLF du panneau acoustique varie progressivement de manière simultanée selon l'axe de propagation de l'onde à savoir l'axe longitudinal 24 dans le cas d'une nacelle pour prendre en compte les variations de NLF induites par les variations de RO, comme illustré sur la figure 5. Inversement, le panneau acoustique peut comprendre un NLF qui varie de manière continue selon l'axe de propagation de l'onde. Dans ce cas, la résistance à l'écoulement à vitesse nulle, RO, varie progressivement de manière simultanée selon l'axe de propagation de l'onde à savoir l'axe longitudinal 24 dans le cas d'une nacelle pour prendre en compte les variations de RO induites par les variations de NLF.

## Revendications

1. Nacelle d'aéronef comprenant un conduit s'étendant depuis une entrée d'air jusqu'à une sortie située à l'arrière de la nacelle, ledit conduit étant revêtu d'un panneau acoustique comprenant une couche réflectrice (28), au moins une structure alvéolaire (30) et une structure acoustiquement résistive (32) formant une surface aérodynamique dudit conduit à la surface de laquelle se propage au moins une onde acoustique selon un axe de propagation (24), au moins une des caractéristiques du panneau acoustique influençant l'impédance dudit panneau variant selon l'axe de propagation (24) de ladite au moins une onde acoustique, **caractérisée en ce qu'**au moins une caractéristique du panneau acoustique influençant l'impédance est constante dans une zone A située au niveau de l'entrée d'air de la nacelle et a une valeur V1, est constante dans une zone C située au niveau de la partie arrière de la nacelle et a une valeur V2 et varie dans une zone B séparant les zones A et C en passant de manière continue de la valeur V1 à la valeur V2.

2. Nacelle d'aéronef selon la revendication 1, **caractérisée en ce que** toutes les caractéristiques du panneau acoustique influençant l'impédance sont sensiblement constantes dans un plan perpendiculaire à l'axe de propagation (24).

3. Nacelle d'aéronef selon la revendication 1 ou 2, **caractérisée en ce que** la caractéristique du panneau acoustique qui varie est le taux de surface ouverte.

4. Nacelle d'aéronef selon la revendication 1 ou 2, **caractérisée en ce que** le panneau comprend deux caractéristiques qui varient de manière Simultanée, la résistance à l'écoulement à vitesse nulle RO et le facteur de non linéarité NLF.

## Claims

1. Aircraft nacelle that comprises a duct extending from an air inlet to an outlet at the rear of the nacelle, said duct being coated by an acoustic panel comprising a reflective layer (28), at least one alveolar structure (30), and an acoustically resistive structure (32) that forms an aerodynamic surface of said duct on the surface of which at least one acoustic wave propagates along an axis of propagation (24), at least one of the characteristics of the acoustic panel influencing the impedance of said panel that varying along the axis of propagation (24) of said at least one acoustic wave, wherein at least one characteristic of the acoustic panel that influences the impedance is constant in a zone A disposed at the level of the air inlet of the nacelle and has a value V1 is constant in a zone C disposed at the level of the rear part of the nacelle and has a value V2 and varies in a zone B between the zones A and C passing continuously from the value V1 to the value V2.

2. Aircraft nacelle according to claim 1, wherein all of the characteristics of the acoustic panel that influence the impedance are essentially constant in a plane that is perpendicular to the axis of propagation (24).

3. Aircraft nacelle according to claim 1 or 2, wherein the characteristic of the acoustic panel that varies is the open surface ratio.

4. Aircraft nacelle according to claim 1 or 2, wherein the panel comprises two characteristics that vary simultaneously: the resistance to the flow at zero speed RO and the non-linearity factor NLF.

## Patentansprüche

1. Gondel eines Flugzeugs, umfassend einen Kanal, der sich von einem Lufteinlass bis zu einem am hinteren Teil der Gondel befindlichen Auslass erstreckt, wobei der Kanal mit einem Schalldämmpaneel verkleidet ist, welches eine reflektierende Schicht (28), wenigstens eine Wabenstruktur (30) sowie eine schallwiderstandsfähige Struktur (32) umfasst, die eine aerodynamische Fläche des Kanals bildet, an deren Oberfläche sich wenigstens eine Schallwelle entlang einer Ausbreitungsachse (24) ausbreitet, wobei wenigstens eines der Merkmale des Schalldämmpaneels, welche die Impedanz des Paneels beeinflussen, sich entlang der Ausbreitungsachse (24) der wenigstens einen Schallwelle ändert, **dadurch gekennzeichnet, dass** wenigstens ein Merkmal des Schalldämmpaneels, das die Impedanz beeinflusst, in einer im Bereich des Lufteinlasses der Gondel befindlichen Zone A konstant ist und einen Wert V1 aufweist, in einer im Bereich des hinteren Teils der Gondel befindlichen Zone C konstant ist und einen Wert V2 aufweist und sich in einer die Zonen A und C voneinander trennenden Zone B durch einen stetigen Übergang vorn Wert V1 zum Wert V2 ändert.

2. Gondel eines Flugzeugs nach Anspruch 1, **dadurch gekennzeichnet, dass** alle Merkmale des Schalldämmpaneels, welche die Impedanz beeinflussen, in einer zu der Ausbreitungsachse (24) senkrechten Ebene im Wesentlichen konstant sind.

3. Gondel eines Flugzeugs nach Anspruch 1 oder 2, **dadurch gekennzeichnet, dass** das Merkmal des Schalldämmpaneels, das sich ändert, der Anteil der offenen Fläche ist.

4. Gondel eines Flugzeugs nach Anspruch 1 oder 2, **dadurch gekennzeichnet, dass** das Paneel zwei Merkmale aufweist, die sich gleichzeitig ändern, den Strömungswiderstand bei Geschwindigkeit null RO und den Nichtlinearitätsfaktor NLF.
